# EUROPÄISCHE PATENTSCHRIFT

(11) **EP 4 168 734 B1**
(45) Veröffentlichungstag und Bekanntmachung des Hinweises auf die Patenterteilung: **24.09.2025**
(21) Anmeldenummer: 21742174.2
(22) Anmeldetag: 10.06.2021
(51) Int. Cl.: G01B 11/06, G02B 21/00

(54) **CHROMATISCH KONFOKALE MESSVORRICHTUNG**
CHROMATIC CONFOCAL MEASURING DEVICE
APPAREIL DE MESURE CONFOCAL CHROMATIQUE

(30) Priorität: 19.06.2020 DE 102020116215; 23.02.2021 DE 102021104190
(43) Veröffentlichungstag der Anmeldung: 26.04.2023
(73) Patentinhaber: Precitec Optronik GmbH, 63263 Neu-Isenburg (DE)
(72) Erfinder: DIETZ, Christoph, 63179 Obertshausen (DE); ROHRMANN, Philipp, 63263 Neu-Isenburg (DE); WEISS, Stephan, 63110 Rodgau (DE)
(74) Vertreter: Schweiger, Martin
(86) Internationale Anmeldenummer: PCT/IB2021/055084
(87) Internationale Veröffentlichungsnummer: WO 2021/255584

(56) Entgegenhaltungen:
- EP-A1- 3 228 979
- FR-A1- 2 930 334
- GB-A- 2 497 792
- US-A1- 2009 097 806
- HARRY OWEN ET AL: "New spectroscopic instrument based on volume holographic optical elements", PROCEEDINGS OF SPIE, vol. 2406, 12 April 1995 (1995-04-12), US, pages 260 - 267, XP055396623, ISBN: 978-1-5106-1533-5, DOI: 10.1117/12.206226

## Beschreibung

Die Erfindung betrifft eine optische Messvorrichtung zur Messung von Abständen und/oder Dicken eines Messobjekts. Die optische Messvorrichtung umfasst einen Messkopf mit einer Abbildungsoptik und eine Auswerteinheit, wobei der Messkopf mit der Auswerteeinheit durch zwei lichtleitende Fasern verbunden ist. Die Auswerteeinheit umfasst eine Lichtquelle, deren Licht durch die erste lichtleitende Faser in den Messkopf geleitet wird. Vom Messobjekt reflektiertes Licht wird zurück durch den Messkopf und mittels eines Strahlteilers in eine zweite lichtleitende Faser geleitet, derart, dass hin- und rücklaufendes Licht getrennt sind, wobei sich die Faserenden in zueinander konjugierten Positionen befinden. Bekannt sind optische Messvorrichtungen, die auf dem chromatisch-konfokalen oder dem interferometrischen Messprinzip basieren.

In der FR2930334 ist ein chromatisch-konfokaler Messkopf mit einer in dem Messkopf integrierten Strahlteilereinheit beschrieben. Diese Strahlteilereinheit und die Fasern für das hin- und zurücklaufende Licht sind fest mit dem Messkopf verbunden. Die Strahlteilereinheit im Messkopf führt zu einer Reduktion von Streulicht und zu einer verbesserten Messgenauigkeit. In dieser Umsetzung ist nachteilig kein Tausch der Fasern möglich, wenn z.B. eine Faser defekt ist oder eine Faser mit anderen Eigenschaften (Länge, Faserkerndurchmesser, ...) benötigt wird. Dies begrenzt die Einsatzmöglichkeiten des Messkopfs.

Das Dokument HARRY OWEN ET AL, "New spectroscopic instrument based on volume holographic optical elements", PROCEEDINGS OF SPIE, US, (19950412), vol. 2406, doi:10.1117/12.206226, ISBN 978-1-5106-1533-5, pages 260 - 267, XP055396623 [X] 1,2,8,13 * page 260 - page 265 offenbart ein Raman-Spektrometer zur volumetrischen Holographie.

Das Dokument EP 3 228 979 A1 offenbart einen integrierten chromatisch konfokalen Sensor.

Das Dokument US 2009/097806 A1 offenbart ein modulares Bildgebungssystem mit einem Emitter, einem Scannermodul und einem Detektionsmodul.

Das Dokument GB 2 497 792 A offenbart eine Messvorrichtung mit einem konfokalen Sensor.

Aufgabe der Erfindung ist es, einen chromatisch-konfokalen Messkopf bereitzustellen, der einen Austausch der Fasern ermöglicht, ohne den Streulichtanteil signifikant zu erhöhen.

Eine solche Lösung gibt es im Stand der Technik bislang nicht. Bekannte Faserstecker, die einen Tausch einzelner Fasern ermöglichen würden, haben einen relativ hohen Platzbedarf. Da der Messkopf mit eingebauter Strahlteilereinheit zwei Faserstecker umfassen müsste (für das hinlaufende und das zurücklaufende Licht), könnten mit diesen Fasersteckern keine kompakten Messköpfe realisiert werden.

Erfindungsgemäß wird die Aufgabe dadurch gelöst, dass der Strahlteiler und die Faserenden gemeinsam in einem Stecker angeordnet sind, welcher mit dem Messkopf trennbar verbunden ist.

In einer vorteilhaften Ausführung bilden die Faserenden der ersten und der zweiten lichtleitenden Faser jeweils konfokale Aperturen. Das erste Faserende wird dabei vom Messkopf auf ein Messobjekt abgebildet. Der Querschnitt der ersten Faser definiert dabei den Durchmesser des Messflecks, d.h. des Abbilds des Faserendes auf dem Messobjekt.

Das zweite Faserende dient als räumlicher Filter für das Messlicht, das vom Messobjekt reflektiert und vom Messkopf auf das zweite Faserende geleitet wird. Da die beiden Faserenden sich in zueinander konjugierten Positionen befinden, dienen das erste und das zweite Faserende somit als konfokale Aperturen. Es ist vorteilhaft, die Faserenden als konfokale Aperturen einzusetzen, da dadurch kein zusätzliches Bauteil, welches die Aperturen bildet, benötigt wird. Es wird auch vermieden, eine Ausrichtung der Faser auf ein separates Aperturbauteil vornehmen zu müssen. Der Durchmesser der Faser ist in dieser Ausführungsform der Durchmesser der Apertur.

Ein Vorteil des Messkopfs mit austauschbarem Faserstecker gegenüber einem Messkopf mit fest verbautem Faserstecker liegt dabei darin, dass sich die Größe der konfokalen Apertur - die in dieser Ausführung durch den Querschnitt der lichtleitenden Fasern gegeben ist - durch einen Tausch des Fasersteckers ändern lässt.

Bei der chromatisch-konfokalen Messung besteht über die Aperturgröße eine gegenläufige Abhängigkeit zwischen der erreichbaren Auflösung und der Intensität des Messlichts (und somit der Signalstärke). Welche Aperturgröße am besten geeignet ist, hängt dabei von der speziellen Messaufgabe ab.

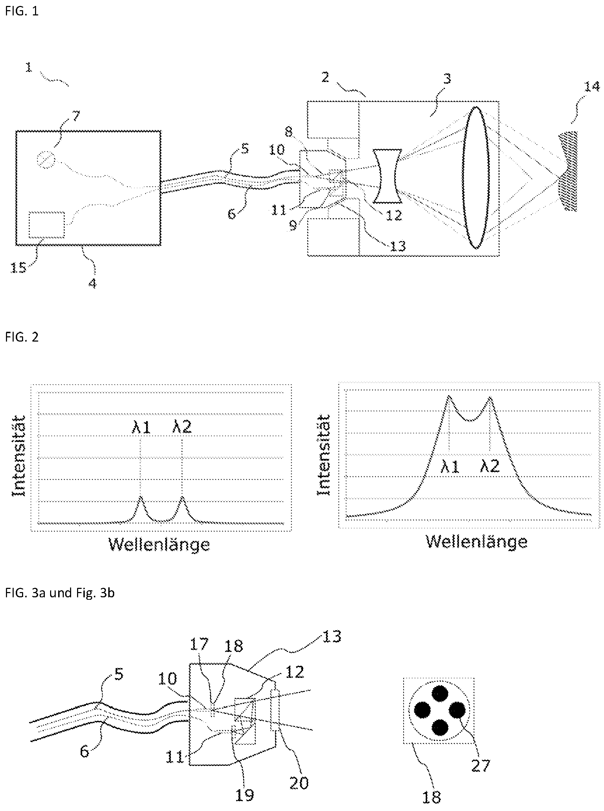

Diese Abhängigkeit ist in Fig.2 veranschaulicht. Fig. 2 illustriert exemplarisch die Auswirkung der Aperturgröße auf das Messsignal bei der Messung einer transparenten Schicht mit einem chromatisch-konfokalen Messkopf. Gezeigt ist die Intensität des Messlichts, das von der zweiten lichtleitenden Faser zur Auswerteeinheit geleitet wird, als Funktion der Wellenlänge.

Die Reflexion des Messlichts an der Ober bzw. Unterseite der transparenten Schicht führt zum Auftreten zweier Peaks, gekennzeichnet durch zwei Peak-Wellenlängen (λ₁ , λ₂). Die Differenz zwischen den Peak-Wellenlängen gibt dabei Aufschluss über die Dicke der Schicht.

Die beiden Schaubilder unterscheiden sich durch den Faserdurchmesser, der im rechten Bild viermal so groß ist wie im linken Bild. Im linken Bild sind die Peaks deutlich getrennt. Im rechten Bild ist die Signalstärke deutlich größer, da durch den größeren Faserdurchmesser mehr Licht von der Lichtquelle zum Messkopf und vom Messobjekt zur Auswerteeinheit geleitet werden kann. Der größere Faserdurchmesser führt allerdings auch zu einer größeren Peakbreite, so dass sich die Schichtdicke nicht so gut auflösen lässt wie im linken Bild.

Ein kleinerer Faserdurchmesser führt zu einem kleineren Messfleck - wodurch sich Messobjekte in lateraler Richtung besser auflösen lassen - sowie zu einer besseren axialen Auflösung, so dass sich dünne Schichten besser messen lassen. Im Gegenzug sinkt die Signalstärke, was bei Messobjekten geringer Reflektivität längere Belichtungszeiten erfordert, was sich wiederum negativ auf die Messrate auswirkt.

Der Aufbau von herkömmlichen Messvorrichtungen, insbesondere die verwendete lichtleitende Faser und das Abbildungsverhältnis des chromatisch-konfokalen Messkopfs, geben dabei einen festen Kompromiss aus Auflösung und Signalstärke vor.

Die optimale Kombination von Auflösung und Signalstärke hängt allerdings von den Eigenschaften des Messobjekts bzw. der Messaufgabe ab. Wird für eine spezielle Messaufgabe beispielsweise eine bessere laterale Auflösung benötigt, ist dann im Stand der Technik - bei einer fest integrierten Strahlteilereinheit - ein Austausch des Messkopfs notwendig. Dies ist aber aufwändig und führt zu erhöhten Kosten, wenn für verschiedene Messaufgabe unterschiedliche Messköpfe benötigt werden.

Die vorliegende Erfindung löst dieses Problem durch den Einsatz eines austauschbaren Fasersteckers. Dies stellt eine einfache und kostengünstige Lösung für das Problem dar, für jede Messaufgabe die optimale Kombination aus Auflösung und Signalstärke zu erhalten.

In einer weiteren bevorzugten Ausführungsform der Erfindung umfasst der Faserstecker eine erste Blendenanordnung, die hinter dem ersten Faserende angeordnet ist und als räumlicher Filter für das vom ersten Faserende ausgesandte Licht wirkt, sowie eine zweite Blendenanordnung, die vor dem zweiten Faserende angeordnet ist und als räumlicher Filter für das vom Messkopf auf das zweite Faserende geleitete Licht wirkt. Die erste und die zweite Blendenanordnung befinden sich dabei an zueinander konjugierten Positionen und dienen somit als konfokale Aperturen.

Diese Ausführungsform bietet den Vorteil, dass sich die Geometrie der konfokalen Apertur in weiten Bereichen frei gestalten und für eine spezielle Messaufgabe optimieren lässt.

Die obenstehenden Erläuterungen zum Einfluss der Faserdurchmesser gelten entsprechend für Querschnitte der Blenden.

Fig. 3b zeigt beispielhaft eine mögliche Ausgestaltung der Blendenanordnung. Die lichtdurchlässigen Bereiche sind hier dunkel gekennzeichnet. Die Blendenanordnung besteht aus 4 kreisförmigen Teil-Aperturen. Gegenüber einer einzelnen - gleich großen - Apertur wird die Signalstärke um das 4-fache vergrößert. Aufgrund des Abstands zwischen den Teil-Aperturen wird das Übersprechen, d.h. der Einfluss jeder Teil-Apertur auf die benachbarten Teil-Aperturen gering gehalten.

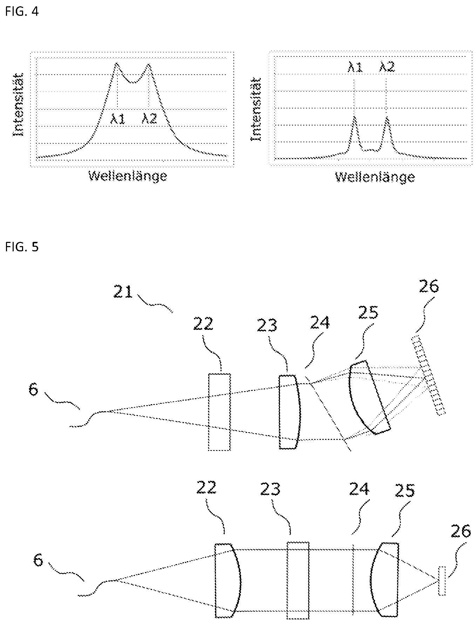

Fig. 4b zeigt das korrespondierende wellenlängenaufgelöste Messsignal bei der Messung einer Schichtdicke mit einem chromatisch-konfokalen Messkopf. Die Breite der Peaks ist hier durch den Durchmesser der einzelnen kreisförmigen Teil-Aperturen bestimmt, d.h. es lassen sich ähnlich kleine Schichtdicken auflösen wie mit einer einzelnen Apertur. Gleichzeitig ist aber wie erwähnt die Signalstärke um das 4-fache erhöht, was höhere Messraten ermöglicht.

Das breite Hintergrundsignal ist bedingt durch das Übersprechen der einzelnen kreisförmigen Teil-Aperturen. Über die Geometrie der Blendenanordnung, insbesondere die Durchmesser und Abstände der kreisförmigen Teil-Aperturen lassen sich Parameter wie die Peakbreite und die Größe des Hintergrundsignals in weiten Grenzen beeinflussen. Somit ist es möglich, durch einen Austausch des Fasersteckers für jede Messaufgabe die optimale Kombination aus Auflösung und Signalstärke zu erhalten.

Neben der in Fig.3 gezeigten Geometrie der Blendenanordnung ist eine Vielzahl anderer, für die jeweilige Messaufgabe optimierter, Aperturgeometrien realisierbar.

Beispielsweise umfasst dies eindimensionale Anordnungen von Teil-Aperturen, beispielsweise eine Linie aus einzelnen kreisförmigen Teil-Aperturen. Bei einer solchen Anordnung ergibt sich eine räumliche Mittelung des Messsignals in der Richtung der Linie, während in der orthogonalen Richtung eine hohe Ortsauflösung erhalten bleibt.

Eine weitere vorteilhafte Ausgestaltung ist eine zweidimensionale Anordnung von Teil-Aperturen. Darunter fallen neben der in Fig.4 gezeigten Geometrie beispielweise ein hexagonales Muster aus kreisförmigen Teil-Aperturen oder ein Schachbrettmuster.

Die Blendenanordnung kann als Glasplatte ausgeführt sein, die auf der Seite des Lichtwellenleiters teilweise mit einer Chromschicht versehen ist. Die Bereiche der Glasplatte, die mit Chrom beschichtet sind, wirken als nicht-durchlässige Bereiche, während die nicht beschichteten Bereiche als lichtdurchlässige Bereiche wirken.

In einer vorteilhaften Ausführungsform misst die Messvorrichtung nach dem chromatisch-konfokalen Prinzip. In diesem Fall umfasst der Messkopf dispersive optische Elemente, die einen Farblängsfehler erzeugen, so dass der Abstand zwischen dem Messkopf und dem Messfleck - dem Abbild einer ersten konfokalen Blende - eine deutliche Abhängigkeit von der Wellenlänge aufweist.

Eine zweite konfokale Blende nimmt das Licht auf, das von einem Messobjekt reflektiert wird und vom Messkopf auf die zweite konfokale Blende geleitet wird. Die Intensität des von der zweiten konfokalen Blende transmittierten und zur Auswerteeinheit geleiteten Lichts ist bei derjenigen Wellenlänge maximal, bei der der Messfleck scharf auf das Messobjekt abgebildet wird.

In einer weiteren möglichen Ausführungsform misst die Messvorrichtung nach dem spektralinterferometrischen Messprinzip. In diesem Fall wird das Licht vom Messkopf auf zwei Grenzflächen geleitet und das von den Grenzflächen reflektierte Licht vom Messkopf aufgenommen und zu einer Auswerteeinheit geleitet.

In der Auswerteeinheit wird der Phasenunterschied zwischen dem Licht, das von der ersten Grenzfläche reflektiert wird, und dem Licht, das von der zweiten Grenzfläche reflektiert wird, ermittelt. Die Abhängigkeit des Phasenunterschieds von der Wellenlänge gibt Aufschluss über den Weglängenunterschied und somit den Abstand zwischen den beiden Grenzflächen.

In einer vorteilhaften Ausführung ist der Stecker so geartet, dass die Faserenden relativ zum Messkopf präzise wiederholbar, insbesondere innerhalb vorgegebener Toleranzen, positioniert werden. Insbesondere sind der Messkopf und der Stecker so geartet, dass die relative Position der konfokalen Aperturen zur Abbildungsoptik bei einem Tausch des Steckers innerhalb der gegebenen Toleranzen erhalten bleibt.

Dadurch kann sichergestellt werden, dass die Eigenschaften des Messkopfs bei einem Tausch des Fasersteckers weitgehend unverändert bleiben. Insbesondere kann sichergestellt werden, dass die Position des Messflecks in Bezug auf den Messkopf unverändert bleibt. Dies bietet den Vorteil, dass die Messvorrichtung bei einem Tausch de Fasersteckers nicht neu kalibriert werden muss, was die Bedienung der Messvorrichtung vereinfacht.

In einer möglichen Ausführung weist der Stecker eine Konusform oder eine trunkierte Konusform auf, welche in einer konusförmigen Aussparung des Messkopfs positioniert wird. Durch die Konusform bzw. die trunkierte Konusform des Steckers ist sichergestellt, dass der Stecker in Bezug auf den Messkopf immer zentriert ist. Insbesondere kommt es zu keinerlei lateralem Versatz (in Bezug auf die optische Achse der Abbildungsoptik) zwischen den konfokalen Aperturen und der Abbildungsoptik bei einem Tausch des Steckers.

Durch die Konusform bzw. die trunkierte Konusform des Steckers lassen sich die Außenmaße des Steckers und die Innenmaße der Aussparung des Messkopfs mit sehr kleiner Passungstoleranz fertigen, ohne dass die Lösbarkeit des Steckers vom Messkopf beeinträchtigt wird. Dadurch lässt sich auch der axiale Versatz zwischen den konfokalen Aperturen und der Abbildungsoptik beliebig minimieren.

In alternativen Ausführungsformen kann der Stecker auch eine von einem Konus abweichende Form aufweisen und z.B. als Pyramidenstumpf ausgeführt sein.

In weiteren alternativen Ausführungsformen können der Stecker und der Messkopf Mittel wie z.B. Nuten und Kugeln aufweisen, die dafür sorgen, dass die Orientierung und die Position des Steckers nach dem Verbinden mit dem Messkopf immer gleichbleiben.

In einer möglichen Ausführungsform weist der Stecker ein Schutzglas auf, das auf der dem Messkopf zugewandten Seite angebracht ist. Das Schutzglas bietet den Vorteil, dass der Stecker vor Verschmutzungen geschützt wird, wenn der Stecker nicht mit dem Messkopf verbunden ist.

Insbesondere wenn sich das Schutzglas im divergenten Strahlengang befindet - beispielsweise, wenn sich keine fokussierenden optischen Elemente zwischen den Faserenden und dem Schutzglas befinden - wird das vom Schutzglas reflektierte Streulicht nur zu einem vernachlässigbar kleinen Teil auf das zweite Faserende geleitet, so dass das Messsignal nicht beeinträchtigt wird.

In analoger Weise kann der Messkopf auf der dem Stecker zugewandten Seite mit einem Schutzglas versehen sein.

Der Strahlteiler und das Schutzglas können mit einer Anti-Reflex-Beschichtung versehen sein, um den geringen Anteil des Streulichts weiter zu vermindern. Damit wird es insbesondere möglich, die Elemente nahe an den Faserenden zu platzieren, was eine besonders kompakte Bauform für den Stecker ermöglicht.

In einer möglichen Ausführungsform ist der Messkopf mit der Auswerteeinheit durch mindestens vier lichtleitende Fasern verbunden, wobei die Fasern je paarweise konjugiert angeordnet sind, insbesondere in zwei Linien. Für jedes Paar von Fasern lässt sich ein Messsignal zur Auswerteeinheit leiten und unabhängig von den anderen Messsignalen auswerten.

Dadurch lassen sich beispielweise mehrere Messflecke auf dem Messobjekt erzeugen, so dass das an mehreren Messpunkten vom Messobjekt reflektierte Licht vom Messkopf aufgenommen und individuell ausgewertet wird.

Bei bestehenden Messköpfen mit einfachem Faserhalter kann ohne größeren Aufwand der Faserhalter durch eine Aufnahmevorrichtung für einen Faserstecker (mit Strahlteilereinheit) ersetzt werden. Die Messköpfe können somit weiterverwendet werden und die Vorteile des Strahlteiler-Steckers genießen.
Figur 1: Messvorrichtung mit Faserstecker
Figur 2: Messsignal für zwei verschiedene Aperturdurchmesser
Figur 3: Faserstecker mit Blendenanordnung
Figur 4: Blendenanordnung und zugehöriges Messsignal
Figur 5: Spektrometer

**Figur 1** zeigt eine erfindungsgemäße optische Messvorrichtung (1), die nach dem chromatisch-konfokalen Messprinzip misst. Die optische Messvorrichtung umfasst einen Messkopf (2), der durch zwei lichtleitende Fasern (5,6) mit einer Auswerteeinheit (4) verbunden ist.

Die Auswerteeinheit umfasst eine Lichtquelle (7), die polychromatisches Licht in die erste lichtleitende Faser (5) einspeist, die das Licht zu dem Messkopf leitet. Die erste lichtleitende Faser weist dabei ein erstes Faserende (10) auf. Der Messkopf umfasst eine Abbildungsoptik (3), die zumindest einen Teil des vom ersten Faserende ausgesandten Lichts auf ein Messobjekt (14) leitet.

Die Abbildungsoptik weist einen ausgeprägten chromatischen Längsfehler auf, so dass das vom ersten Faserende ausgesandte Licht abhängig von der Wellenlänge in unterschiedlichen Abständen zum Messkopf fokussiert wird.

Das vom Messobjekt reflektierte Licht wird vom Messkopf aufgenommen. Zumindest ein Teil des vom Messobjekt reflektierten Lichts wird dabei mittels eines Strahlteilers (12) auf eine zweites Faserende (11) und über die zweite lichtleitende Faser (6) weiter zur Auswerteeinheit geleitet. Die Auswerteeinheit umfasst ein Spektrometer (15), das die Intensität des vom Messobjekt reflektierten Lichts spektral aufgelöst auswertet.

Das erste und das zweite Faserende (10, 11) bilden konfokale Aperturen. Das von der ersten lichtleitenden Faser (5) entsandte und vom Messobjekt (14) reflektierte Licht wird auf die zweite Faser (6) geleitet. Das zweite Faserende (11) dient dabei als räumlicher Filter. Die beiden Faserenden (10, 11) befinden sich an zueinander konjugierten Positionen, so dass die Intensität des von der zweiten Faser (6) aufgenommenen und zur Auswerteeinheit geleiteten Lichts für diejenige Wellenlänge maximal wird, für die das von der ersten Faser (5) ausgesandte Licht vom Messkopf (2) scharf auf das Messobjekt (14) abgebildet wird.

Die Auswertung der wellenlängenaufgelösten Intensität im Spektrometer (15) gibt dabei Aufschluss über den Abstand des Messobjekts (14) vom Messkopf (2).

Durch den Strahlteiler (12) werden das von der ersten Faser (5) ausgesandte und zum Messobjekt (14) hinlaufende Licht (8) und das vom Messobjekt (14) rücklaufende und zur zweiten Faser (6) geleitete Licht (9) räumlich getrennt. Dies hat den Vorteil, dass das von der Lichtquelle (7) stammende und vom ersten Faserende (10) zurückgestreute Licht nicht in die zweite Faser (6) gelangt und somit das Messsignal nicht beeinflusst.

Der Strahlteiler (12) sowie die beiden Faserenden (10, 11) sind dabei gemeinsam in einem Stecker (13) angeordnet, der mit dem Messkopf (2) trennbar verbunden ist. Der Stecker (13) besitzt eine trunkierte Konusform, während der Messkopf (2) eine entsprechende Aussparung (16) aufweist.

Diese Geometrien des Steckers und der Aussparung bieten den Vorteil, dass der Stecker automatisch nach dem Einsetzen bzgl. der Aussparung zentriert ist, d.h. sich an einer definierten lateralen Position bzgl. der optischen Achse der Abbildungsoptik befindet.

Die hat den großen Vorteil, dass die Position der Lichtaustrittsfläche - in diesem Fall des ersten Faserendes - in Bezug auf die Abbildungsoptik auch bei einem Tausch des Steckers unverändert bleibt, so dass sich beispielsweise auch die Position des Messflecks auf der zu vermessenden Oberfläche nicht ändert.

**Figur 2** zeigt ein Messsignal, das sich bei der Messung einer transparenten Schicht mit einer Messvorrichtung gemäß Figur 1 ergibt. Die Reflexion des von der vom Messkopf ausgesandten Lichts an den beiden Grenzflächen der Schicht, d.h. der Oberseite und der Unterseite der Schicht, führt zum Auftreten zweier Intensitätsmaxima im Messsignal.

Die Maxima treten bei denjenigen Wellenlängen auf, bei denen das Licht auf der Oberseite bzw. der Unterseite der zu vermessenden Schicht fokussiert ist. Die Bestimmung der beiden Wellenlängen erfolgt mit einem Spektrometer und gibt Aufschluss über die Schichtdicke.

Die beiden Schaubilder unterscheiden sich durch den Durchmesser der lichtleitenden Faser; die anderen Komponenten der Messvorrichtung, insbesondere der Messkopf, sind für beiden Schaubilder identisch. Der Faserdurchmesser in Fig. 2b ist 4-mal so groß wie bei Fig. 2a; dies wäre beispielsweise der Fall, wenn für Fig. 2a der Faserdurchmesser 50µm beträgt und für Fig 2b 200µm.

Der kleinere Faserdurchmesser in Fig. 2a führt zu einer besseren axialen Auflösung, die sich hier in einer deutlichen Trennung zwischen den beiden Intensitätsmaxima äußert. Der größere Faserdurchmesser in Fig. 2b führt zwar zu einer schlechteren axialen Auflösung, verbunden mit einer undeutlicheren Trennung der beiden Intensitätsmaxima, im Gegenzug aber auch zu einer höheren Intensität des Messlichts, die sich in einer höheren Amplitude im Messsignal äußert.

Insgesamt verdeutlicht Figur 2, wie ein Wechsel des Fasersteckers bei ansonsten unveränderten Komponenten der Messvorrichtung zu einer Änderung der Eigenschaften der Messvorrichtung führt. Dies kann vorteilhaft dazu genutzt werden, um für jede Messaufgabe die optimalen Eigenschaften der Messvorrichtung bereitzustellen.

**Figur 3a** zeigt eine alternative Ausführung des Steckers für eine Messvorrichtung gemäß Figur 1. Der Stecker (13) umfasst eine erste Blendenanordnung (17), die direkt hinter dem ersten Faserende (10) angeordnet ist. Die erste Blendenanordnung wirkt als räumlicher Filter für das Licht, das von der ersten lichtleitenden Faser (5) zum Messkopf geleitet und vom ersten Faserende ausgesandt wird.

In diesem Beispiel ist die erste Blendenanordnung als Glasplatte (18) ausgeführt, die auf der dem ersten Faserende (10) zugewandten Seite teilweise mit einer Chromschicht versehen ist. Die mit einer Chromschicht versehen Bereich verhindern eine Transmission des Lichts, während die nichtbeschichteten Bereich der Glasplatte lichtdurchlässig sind und die konfokale Apertur definieren.

**Figur 3b** zeigt eine beispielhafte Ausführung der teilweise beschichteten Glasplatte (18). Die lichtdurchlässigen - d.h. nicht mit Chrom beschichteten - Bereiche der Glasplatte sind dunkel gezeichnet. Insgesamt besteht die konfokale Apertur hier aus einer Anordnung von 4 kreisförmigen Teil-Aperturen (27).

Der Faserquerschnitt ist hier mit einer gestrichelten Linie gekennzeichnet. Der Faserdurchmesser ist hier größer als die Ausdehnung der Anordnung der Teil-Aperturen (27), so dass alle lichtdurchlässigen Bereiche mit Licht aus dem ersten Faserende beleuchtet werden.

Der Stecker in **Figur 3a** umfasst weiterhin eine zweite Blendenanordnung (19), die direkt vor dem zweiten Faserende (11) angeordnet ist. Die zweite Blendenanordnung (19) ist hier identisch zur ersten Blendenanordnung (17) ausgeführt und sorgt für eine räumliche Filterung des Lichts, das durch den Messkopf vom Messobjekt zum zweiten Faserende (11) geleitet und danach durch die zweite lichtleitende Faser (6) zur Auswerteeinheit weitergeleitet wird.

Da die sich das erste und zweite Faserende (10, 11) an zueinander konjugierten Positionen befinden, befinden sich auch die erste und zweite Blendenanordnung (17, 19) an zueinander konjugierten Positionen und wirken somit als konfokale Aperturen.

Der Stecker umfasst im gezeigten Ausführungsbeispiel ein Schutzglas (20). Das Schutzglas sorgt dafür, dass die optischen Komponenten im Innern des Steckers vor Verschmutzungen geschützt bleiben, die zu Streulicht führen und sich somit negativ auf die Signalqualität auswirken können.

Das Licht, das vom ersten Faserende (10) ausgesandt wird, trifft divergent auf das Schutzglas (20). Ein Teil des Lichts wird dabei an den beiden Oberflächen des Schutzglases zurück zum ersten Faserende (10) und - über den Strahlteiler (12) auch zum zweiten Faserende (11) geleitet.

Aufgrund des divergenten Strahlengangs ist das vom Schutzglas (20) reflektierte Licht allerdings am Ort des ersten und des zweiten Faserendes (10, 11) sehr stark aufgefächert, so dass man nur einen vernachlässigbar kleinen Anteil an Streulicht erhält.

Um den Anteil des Streulichts weiter zu verringern, können die Oberflächen des Schutzglases (20) und/oder des Strahlteilers (12) mit einer Anti-Reflex-Beschichtung versehen sein. Dadurch wird es insbesondere möglich, die optischen Komponenten im Stecker nahe beieinander anzuordnen und somit eine sehr kompakte Bauweise für den Stecker zu ermöglichen, ohne den Anteil des Streulichts signifikant zu erhöhen.

**Figur 4** zeigt ein Messsignal, das sich bei der Messung einer transparenten Schicht mit einer Messvorrichtung gemäß Figur 3 ergibt. Die Reflexion des von der vom Messkopf ausgesandten Lichts an den beiden Grenzflächen der Schicht, d.h. der Oberseite und der Unterseite der Schicht, führt zum Auftreten zweier Intensitätsmaxima im Messsignal.

Die Maxima treten bei denjenigen Wellenlängen auf, bei denen das Licht auf der Oberseite bzw. der Unterseite der zu vermessenden Schicht fokussiert ist. Die Bestimmung der beiden Wellenlängen erfolgt mit einem Spektrometer und gibt Aufschluss über die Schichtdicke.

Die beiden Schaubilder unterscheiden sich durch die Ausgestaltung der konfokalen Blenden. Im linken Schaubild wir eine einzelne kreisförmige Blende verwendet, deren Durchmesser dem Faserdurchmesser entspricht. Im rechten Schaubild besteht die konfokale Apertur aus einer Anordnung von 4 kreisförmigen Teil-Aperturen, wie in Figur 3b dargestellt.

Im rechten Schaubild sind die Intensitätsmaxima deutlich getrennt; dies liegt an der verbesserten axialen Auflösung der Messvorrichtung, die durch den Durchmesser der Teil-Aperturen bestimmt wird, der kleiner ist als der Durchmesser der lichtleitenden Faser. Gleichzeitig ist die Signalstärke gegenüber einer einzelnen Teil-Apertur um das 4-fache erhöht, da jede Teil-Apertur zum Messsignal beiträgt.

Durch Ausgestaltung der Blendenanordnung lässt sich somit für jede Messaufgabe eine optimale Kombination aus axialer Auflösung und Signalstärke erreichen.

**Figur 5** zeigt eine mögliche Ausführungsform des Spektrometers für eine Messvorrichtung gemäß Figur 1. Das Spektrometer (21) ist in der Auswerteeinheit angeordnet und über die zweite lichtleitende Faser (6) mit dem Messkopf verbunden. Die zweite Faser (6) leitet das Licht, das vom Messobjekt reflektiert wurde, vom Messkopf zum Spektrometer (21). Das Spektrometer wird verwendet, um die Intensität dieses Lichts spektral aufgelöst auszuwerten.

Das aus der zweiten Faser (6) ausgestrahlte Licht wird zunächst kollimiert und auf ein Transmissionsgitter geleitet. Das Licht wird vom Transmissionsgitter (24) gebeugt, wobei der Beugungswinkel von der Wellenlänge abhängt. Das gebeugte Licht wird dann von einer Fokussieroptik auf eine Detektorzeile (26) abgebildet, wobei der Ort, an dem das Licht auf die Detektorzeile trifft, von der Wellenlänge abhängt.

Um den Ort auszuwerten zu können, an dem das Licht auf die Zeile auftrifft, ist die Zeile in der Richtung der Aufspaltung (fortan Zeilenrichtung genannt), in eine Vielzahl von lichtempfindlichen Zellen unterteilt. Um die Ortsauflösung - und somit die Wellenlängenauflösung - zu verbessern, ist es vorteilhaft, die Ausdehnung der lichtempfindlichen Zellen in Zeilenrichtung klein zu halten.

Gleichzeitig ist es vorteilhaft, das Abbild der Faser auf der Detektorzeile klein zu halten, idealerweise kleiner als die Ausdehnung der lichtempfindlichen Zellen, d.h. eine verkleinernde Abbildung der Faser auf die Detektorzeile zu wählen. Insbesondere bei Verwendung von Fasern mit großem Faserdurchmesser muss die Abbildung dazu stark verkleinernd gewählt werden.

Eine solche stark verkleinernde Abbildung führt jedoch nachteilig zu hohen numerischen Aperturen, d.h. großen Öffnungswinkel der Strahlkegel für das Licht, das von der Fokussieroptik auf die Detektorzeile geleitet wird. Um eine gute Abbildungsqualität zu erhalten, muss entweder eine komplexe Fokussieroptik bereitgestellt werden - was sich negativ auf die Kosten auswirkt - oder das Licht vignettiert werden - was zu Lichtverlusten führt.

Die hier gezeigte Ausführung des Spektrometers erlaubt es, die Wellenlängenauflösung zu optimieren, ohne die Helligkeit zu stark einzuschränken. Dazu wird eine anamorphotische Abbildung gewählt, die das Faserende in Zeilenrichtung stark verkleinert, orthogonal zur Zeilenrichtung hingegen nur schwach verkleinert.

Das Spektrometer weist dazu eine erste Zylinderlinse (22) auf, die das Licht, das von der zweiten Faser (2) in das Spektrometer ausgesandt wird, orthogonal zur Zeilenrichtung fokussiert, sowie eine zweite Zylinderlinse (23), die hinter der ersten Zylinderlinse angeordnet ist und die das Licht in Zeilenrichtung fokussiert.

Die zweite Zylinderlinse besitzt eine größere Brennweite als die erste Zylinderlinse. Aufgrund des größeren Abstands zur Faser wird das Licht in Zeilenrichtung vignettiert, d.h. ein Teil des von der Faser ausgesandten Lichts wird nicht weiter zur Detektorzeile geleitet. Orthogonal zur Zeilenrichtung findet hingegen keine bzw. nur eine geringe Vignettierung statt.

Das von der ersten bzw. der zweiten Zylinderlinse kollimierte Licht durchtritt ein Transmissionsgitter (24), wird spektral aufgespalten und von einer sphärischen Linse (25) auf die Detektorzeile (26) abgebildet. Der Abbildungsmaßstab ist dabei in Zeilenrichtung kleiner als orthogonal zur Zeilenrichtung, so dass das Abbild des runden Faserendes auf der Detektorzeile eine elliptische Form aufweist, wobei die kleine Halbachse parallel zur Zeilenrichtung ist.

In einer anderen möglichen Ausführungsform des Spektrometers wird das Licht einer Faser mit großem Faserdurchmesser, beispielsweise 200µm, zunächst in eine Vielzahl von Fasern mit kleinerem Faserdurchmesser, beispielweise 50µm eingekoppelt. Das Licht aus jeder Faser mit kleinerem Faserdurchmesser kann dann spektral aufgespalten und auf eine separate Detektorzeile bzw. einen separaten Bereich einer Detektorzeile abgebildet werden.

## Patentansprüche

1. Optische Messvorrichtung (1), umfassend
einen Messkopf (2) mit einer Abbildungsoptik (3) und eine Auswerteinheit (4),
wobei der Messkopf (2) mit der Auswerteeinheit (4) durch zwei lichtleitende Fasern (5, 6) verbunden ist,
wobei die Auswerteeinheit (4) eine Lichtquelle (7) umfasst, deren Licht durch die erste lichtleitende Faser (5) in den Messkopf (2) geleitet wird
und wobei vom Messobjekt (14) reflektiertes Licht zurück durch den Messkopf (2) und mittels eines Strahlteilers (12) in eine zweite lichtleitende Faser (6) geleitet wird, derart, dass hin- und rücklaufendes Licht getrennt sind,
wobei sich die Faserenden (10, 11) in zueinander konjugierten Positionen befinden, **dadurch gekennzeichnet, dass**
der Strahlteiler (12) und die Faserenden (10, 11) gemeinsam in einem Stecker (13) angeordnet sind, welcher mit dem Messkopf (2) trennbar verbunden ist.

2. Optische Messvorrichtung (1) nach Anspruch 1, wobei das erste und das zweite Faserende (10, 11) jeweils konfokale Aperturen bilden

3. Optische Messvorrichtung (1) nach Anspruch 1, wobei der Stecker (13) mindestens eine Blendenanordnung (17) umfasst, die eine konfokale Apertur bildet.

4. Optische Messvorrichtung (1) nach Anspruch 3, wobei die mindestens eine Blendenanordnung (17) mehrere Teilöffnungen aufweist.

5. Optische Messvorrichtung (1) nach Anspruch 3-4, wobei der Stecker (13) eine erste und eine zweite Blendenanordnung (17, 19) aufweist, wobei die erste und die zweite Blendenanordnung (17, 19) identisch ausgeführt sind.

6. Optische Messvorrichtung (1) nach Anspruch 1-5, welche nach dem chromatisch-konfokalen Prinzip misst.

7. Optische Messvorrichtung (1) nach Anspruch 1-5, welche nach dem spektral interferometrischen Prinzip misst.

8. Optische Messvorrichtung (1) nach einem der vorangegangenen Ansprüche, wobei der Stecker (13) so geartet ist, dass die Faserenden (10, 11) relativ zum Messkopf (2) präzise wiederholbar, insbesondere innerhalb vorgegebener Toleranzen, positioniert werden.

9. Optische Messvorrichtung (1) nach Anspruch 8, **dadurch gekennzeichnet, dass** der Stecker (13) eine Konusform oder eine trunkierte Konusform aufweist, welche in einer konusförmigen Aussparung des Messkopfes (2) positioniert wird.

10. Optische Messvorrichtung (1) nach einem der vorangegangenen Ansprüche, **dadurch gekennzeichnet, dass** der Stecker (13) ein Schutzglas umfasst.

11. Optische Messvorrichtung (1) nach einem der vorangegangenen Ansprüche, **dadurch gekennzeichnet, dass** der Messkopf (2) mit der Auswerteeinheit (4) durch mindestens vier lichtleitende Fasern verbunden ist, wobei die Fasern je paarweise konjugiert angeordnet sind, insbesondere in zwei Linien.

12. Optische Messvorrichtung (1) nach einem der vorangegangenen Ansprüche, **dadurch gekennzeichnet, dass** der Strahlteiler (12) und/oder das Schutzglas mit einer Anti-Reflex-Beschichtung versehen sind.

13. Optische Messvorrichtung (1) nach einem der vorangegangenen Ansprüche, wobei die Auswerteeinheit (4) ein Spektrometer (15) aufweist, das das von der zweiten lichtleitenden Faser (6) ausgestrahlte Messlicht spektral aufgelöst auf eine Detektorzeile abbildet, wobei die Abbildung anamorphotisch gestaltet ist, so dass sich der Abbildungsmaßstab in Richtung der Detektorzeile vom Abbildungsmaßstab orthogonal zur Richtung der Detektorzeile unterscheidet.

## Claims

1. Optical measuring device (1), comprising
a measuring head (2) with an imaging optics (3) and an evaluation unit (4),
wherein the measuring head (2) is connected to the evaluation unit (4) by two light-conducting fibers (5, 6),
wherein the evaluation unit (4) comprises a light source (7) the light of which is guided into the measuring head (2) through the first light-conducting fiber (5),
and wherein light reflected from the object to be measured (14) is guided back through the measuring head (2) and into a second light-conducting fiber (6) by means of a beam splitter (12) such that outgoing and return light are separated,
wherein the fiber ends (10, 11) are located in conjugated positions with respect to each other,
**characterized in that**
the beam splitter (12) and the fiber ends (10, 11) are arranged together in a connector (13) which is separably connected to the measuring head (2).

2. Optical measuring device (1) according to claim 1, wherein the first and the second fiber ends (10, 11) respectively form confocal apertures.

3. Optical measuring device (1) according to claim 1, wherein the connector (13) comprises at least one aperture arrangement (17) which forms a confocal aperture.

4. Optical measuring device (1) according to claim 3, wherein the at least one aperture arrangement (17) comprises a plurality of sub-apertures.

5. Optical measuring device (1) according to claim 3-4, wherein the connector (13) comprises a first and a second aperture arrangement (17, 19), wherein the first aperture arrangement and the second aperture arrangement (17, 19) are identically configured.

6. Optical measuring device (1) according to claim 1-5, which measures according to the chromatic-confocal principle.

7. Optical measuring device (1) according to claim 1-5, which measures according to the spectral interferometric principle.

8. Optical measuring device (1) according to any one of the preceding claims, wherein the connector (13) is configured such that the fiber ends (10, 11) are positioned relative to the measuring head (2) in a precisely repeatable manner, in particular, within predetermined tolerances.

9. Optical measuring device (1) according to claim 8, **characterized in that** the connector (13) has a cone shape or a truncated cone shape which is positioned in a cone-shaped recess of the measuring head (2).

10. Optical measuring device (1) according to any one of the preceding claims, **characterized in that** the connector (13) comprises a protective glass.

11. Optical measuring device (1) according to any one of the preceding claims, **characterized in that** the measuring head (2) is connected to the evaluation unit (4) by at least four light-conducting fibers, wherein the fibers are each arranged conjugated in pairs, in particular, in two lines.

12. Optical measuring device (1) according to any one of the preceding claims, **characterized in that** the beam splitter (12) and/or the protective glass are provided with an anti-reflective coating.

13. Optical measuring device (1) according to any one of the preceding claims, wherein the evaluation unit (4) comprises a spectrometer (15) which images the measuring light emitted by the second light-conducting fiber (6) spectrally resolved onto a detector row, wherein the imaging is configured to be anamorphic so that the imaging scale in the direction of the detector row differs from the imaging scale orthogonal to the direction of the detector row.

## Revendications

1. Dispositif de mesure optique (1) comprenant
une tête de mesure (2) avec une optique de reproduction (3) et une unité d'évaluation (4),
la tête de mesure (2) étant reliée à l'unité d'évaluation (4) par deux fibres optiques (5, 6),
dans lequel l'unité d'évaluation (4) comprend une source lumineuse (7) dont la lumière est guidée dans la tête de mesure (2) par la première fibre optique (5)
et dans lequel de la lumière réfléchie par l'objet à mesurer (14) est guidée à travers la tête de mesure (2) et est guidée au moyen d'un séparateur de faisceaux (12) dans une deuxième fibre optique (6), de telle sorte que la lumière aller et la lumière retour sont séparées,
les extrémités des fibres (10, 11) se trouvant dans des positions conjuguées l'une par rapport à l'autre,
**caractérisé en ce que**
le séparateur de faisceaux (12) et les extrémités des fibres (10, 11) sont disposés ensemble dans un connecteur (13) qui est relié de manière amovible à la tête de mesure (2).

2. Dispositif de mesure optique (1) selon la revendication 1, dans lequel la première et la deuxième extrémité des fibres (10, 11) forment chacune des ouvertures confocales.

3. Dispositif de mesure optique (1) selon la revendication 1, dans lequel le connecteur (13) comprend au moins un agencement de diaphragmes (17) qui forme une ouverture confocale.

4. Dispositif de mesure optique (1) selon la revendication 3, dans lequel l'au moins un agencement de diaphragmes (17) comprend plusieurs ouvertures partielles.

5. Dispositif de mesure optique (1) selon les revendications 3-4, dans lequel le connecteur (13) comprend un premier et un deuxième agencement de diaphragmes (17, 19), le premier et le deuxième agencement de diaphragmes (17, 19) étant formés de manière identique.

6. Dispositif de mesure optique (1) selon les revendications 1 à 5, qui mesure selon le principe chromatique confocal.

7. Dispositif de mesure optique (1) selon les revendications 1 à 5, qui mesure selon le principe interférométrique spectral.

8. Dispositif de mesure optique (1) selon l'une des revendications précédentes, dans lequel le connecteur (13) est conçu de telle sorte que les extrémités des fibres (10, 11) peuvent être positionnées de manière précise et reproductible, en particulier dans des tolérances prédéfinies, par rapport à la tête de mesure (2).

9. Dispositif de mesure optique (1) selon la revendication 8, **caractérisé en ce que** le connecteur (13) comprend une forme conique ou une forme tronconique qui est positionnée dans un évidement conique de la tête de mesure (2).

10. Dispositif de mesure optique (1) selon l'une des revendications précédentes, **caractérisé en ce que** le connecteur (13) comprend un verre de protection.

11. Dispositif de mesure optique (1) selon l'une des revendications précédentes, **caractérisé en ce que** la tête de mesure (2) est reliée à l'unité d'évaluation (4) par au moins quatre fibres optiques, les fibres étant disposées par paires conjuguées, en particulier en deux lignes.

12. Dispositif de mesure optique (1) selon l'une des revendications précédentes, **caractérisé en ce que** le séparateur de faisceaux (12) et/ou le verre de protection sont pourvus d'un revêtement antireflet.

13. Dispositif de mesure optique (1) selon l'une des revendications précédentes, dans lequel l'unité d'évaluation (4) comprend un spectromètre (15) qui reproduit la lumière de mesure émise par la deuxième fibre optique (6) sous forme de spectre sur une ligne de détecteurs, la reproduction étant de type anamorphique, de sorte que l'échelle de reproduction dans la direction de la ligne de détecteurs diffère de l'échelle de reproduction orthogonale à la direction de la ligne de détecteurs.
